# EUROPÄISCHE PATENTSCHRIFT

(11) **EP 2 145 753 B1**
(45) Veröffentlichungstag und Bekanntmachung des Hinweises auf die Patenterteilung: **06.12.2017**
(21) Anmeldenummer: 09008180.3
(22) Anmeldetag: 23.06.2009
(51) Int. Cl.: B30B 7/02, B32B 37/10, B32B 37/00, B30B 15/00

(54) **Mehretagen-Laminierpresse**
Multi-level laminating press
Presse de lamination à plusieurs étages

(30) Priorität: 18.07.2008 DE 202008009719 U
(43) Veröffentlichungstag der Anmeldung: 20.01.2010
(73) Patentinhaber: Robert Bürkle GmbH, 72250 Freudenstadt (DE)
(72) Erfinder: Haist, Markus, 72250 Freudenstadt (DE)
(74) Vertreter: Lemcke, Brommer & Partner Patentanwälte Partnerschaft mbB

(56) Entgegenhaltungen:
- DE-C- 953 384
- FR-A1- 2 256 028
- FR-A1- 2 802 463
- JP-A- 6 190 593

## Beschreibung

Die Erfindung betrifft eine Mehretagen-Laminierpresse zum Laminieren von im Wesentlichen plattenförmigen Werkstücken unter Druck- und Wärmeeinwirkung nach dem Oberbegriff des Anspruchs 1.

Eine Mehretagen-Laminierpresse der vorliegenden Art enthält demnach eine Anzahl von Pressplatten, die jeweils paarweise eine Laminatoretage bilden. Die Laminatoretagen können außer einer untenliegenden und einer obenliegenden Pressplatte weitere Elemente umfassen, wie beispielsweise ein Druckkissen, eine Vakuumkammer und dergleichen. Meist sind die Pressplatten als Heizplatten ausgebildet, um Prozesswärme in die jeweilige Laminatoretage einzubringen. Diese Heizplatten können so ausgebildet sein, dass sie in jeweils zwei Laminatoretagen Wärme abgeben; sie können bedarfsweise jedoch auch nur entweder nach oben oder nach unten Wärme abgeben.

Die Pressplatten einer Mehretagen-Laminierpresse der vorliegenden Art sind gemeinsam vertikal zusammenfahrbar und können umgekehrt vertikal wieder auseinandergefahren werden, um die Laminierpresse zu schließen und zu öffnen. Zu diesem Zweck sind eine Pressenbasis und/oder ein Pressen-Oberteil vertikal verfahrbar. Dies bedeutet, dass die Pressplatten gegeneinander beweglich am Pressen-Oberteil aufgehängt sind und entweder das Pressen-Oberteil zur feststehenden Pressenbasis hin, oder eine bewegliche Pressenbasis zum dann feststehenden Pressen-Oberteil hin nach unten bzw. nach oben bewegt wird, so dass sich die Laminatoretagen sukzessive schließen. Im Rahmen der vorliegenden Erfindung können alternativ auch sowohl die Pressenbasis als auch das Pressen-Oberteil vertikal bewegbar sein und sich zum Schließen der Laminierpresse zueinander bewegen.

Ein Problem bei einer solchen Mehretagen-Laminierpresse besteht darin, dass die Pressplatten ein relativ hohes Eigengewicht haben. Wenn nun beispielsweise die Pressenbasis nach oben zum Pressen-Oberteil hin bewegt wird, um die Mehretagen-Laminierpresse zu schließen, wie dies z.B. in der FR-A-2 802 463 beschrieben ist, legt sich zunächst die über der Pressenbasis liegende Pressplatte auf die Pressenbasis auf, wird mit dieser zusammen weiter nach oben gefahren, wonach sich die nächste Pressplatte auflegt, so dass die Pressenbasis nun mit zwei aufliegenden Pressplatten bis zur dritten Pressplatte gefahren wird, die sich wiederum oben auflegt usw. Der Druck, der in der untersten Laminatoretage, zwischen der Pressenbasis und der ersten Pressplatte herrscht, wird also von Pressplatte zu Pressplatte verstärkt, da die Gewichte aller oberhalb liegenden und aufgefahrenen Pressplatten aufaddiert auf der untersten Laminatoretage lasten. Wenn Werkstücke laminiert werden sollen, die lediglich mit einem begrenzten Druck beaufschlagt werden dürfen, wie beispielsweise Photovoltaik-Module, bestehend im Wesentlichen aus einer Sölarzellenschicht mit elektrischen Kontaktierungselementen, einer Trägerschicht und einer aus Glas bestehenden Abdeckung, muss jedoch vermieden werden, dass die Gewichte der über einer bestimmten Laminatoretage liegenden Pressplatten auf dieser Laminatoretage lasten.

Zur Vermeidung dieses Problems ist in der US 3,468,243 vorgeschlagen worden, das Schließen der Mehretage-Laminierpresse über eine Hebelmechanik auf die einzelnen Pressplatten zu übersetzen, so dass jede einzelne Pressplatte an einem gemeinsamen, von der Pressenbasis bewegten Hebel hängt und in einem bestimmten Übersetzungsverhältnis indirekt von der Pressenbasis nach oben gegen das Pressen-Oberteil bewegt wird. Hierdurch schießen sich alle Laminatoretagen synchron, und die Gewichtskraft der Pressplatten wird über die Hebelmechanik kompensiert. Allerdings benötigt eine solche Hebelmechanik einen überaus großen Bauraum, und sie muss sehr genau und aufwändig auf die Abmessungen der zu laminierenden Werkstücke justiert werden.

In der EP-A-0 972 636 ist deshalb vorgeschlagen worden, den Pressplatten anstelle einer aufwändigen Hebelmechanik jeweils Gewichtsausgleichselemente zuzuordnen, welche die im zusammengefahrenen Zustand vom Eigengewicht der jeweiligen Pressplatte erzeugte Gewichtskraft zumindest zum Teil kompensiert. Die Gewichtsausgleichselemente nach diesem Stand der Technik sind als Fluidzylinder ausgebildet, die die einfache Aufhängung jeder Pressplatte an der nächst darüberliegenden Pressplatte ersetzen bzw. ergänzen und jede Pressplatte beim Schließen der Mehretagen-Laminierpresse relativ zur nächsthöheren Platte oder vorzugsweise relativ zu einem feststehenden Pressen-Oberteil so weit anheben, dass deren Gewichtskraft bis zu etwa 90 % kompensiert wird. Um dieses Ziel zu erreichen, werden die Fluidzylinder mit jeweils einer eigenen Regeleinheit angesteuert, was naturgemäß aufwändig ist und wiederum einen nicht zu vernachlässigenden Bauraum in Anspruch nimmt. Das Dokument FR-2802463-A1 offenbart ein Mehretagen-Laminierpresse mit den Merkmalen des Oberbegriffs des Anspruchs 1.

Der vorliegenden Erfindung liegt die Aufgabe zugrunde, eine Mehretagen-Laminierpresse der voranstehend beschriebenen Art trotz Beibehalten von Gewichtsausgleichselementen für die Pressplatten zu vereinfachen. Gelöst ist diese Aufgabe durch eine Mehretagen-Laminierpresse mit den Merkmalen des Anspruchs 1. Bevorzugte Ausgestaltungen und Weiterbildungen der erfindungsgemäßen Mehretagen-Laminierpesse finden sich in den Ansprüchen 2 bis 10.

Nach der vorliegenden Erfindung werden die Gewichtsausgleichselemente demnach als federnde Anschlagselemente ausgebildet, die an der Pressenbasis und/oder dem Pressen-Oberteil direkt oder indirekt gegengelagert sind. Da die Gewichtsausgleichselemente als Anschlagselemente ausgebildet sind, erübrigt sich eine separate Regelung. Beim Zufahren einer Laminatoretage wird das Gewicht der jeweils obenliegenden Pressplatte mittels der federnden Eigenschaft des erfindungsgemäßen Anschlagselements durch die zunehmende Federvorspannung zunehmend kompensiert, bis sie beim Auffahren auf das Anschlagselement zu einem Großteil oder sogar ganz kompensiert wird. Zweckmäßigerweise wird die federnde Strecke des als Anschlagselement ausgebildeten Gewichtsausgleichselements allerdings so lang gewählt, dass die entsprechende Pressplatte nie gegen den "harten" Anschlag läuft. Da die erfindungsgemäßen Anschlagselemente an der Pressenbasis und/oder dem Pressen-Oberteil gegengelagert sind, muss die Federstrecke jeweils lediglich dem maximalen Abstand zwischen zwei Pressplatten einer Laminatoretage entsprechen; denn bei vollständig geschlossener Mehretagen-Laminierpresse sind die Abstände zwischen jeder einzelnen Pressplatte und sowohl dem Pressen-Oberteil als auch der Pressenbasis definiert festgelegt und werden in keinem Fall unterschritten.

Die Gewichtsausgleichselemente können jeweils einen Hydraulikzylinder mit nachgeschaltetem, hydropneumatischem Druckspeicher umfassen, wobei das im hydropneumatischen Druckspeicher enthaltene Luftpolster die federnde Eigenschaft des Anschlagselements realisiert. Der Hydraulikzylinder bildet dann einen sehr leicht regelbaren Anschlag.

Anstatt eines hydropneumatischen Druckspeichers kann der Hydraulikzylinder auch mit einer aktiven Druckregelung versehen werden, die eine Pumpe und eine Regeleinheit enthält, um die federnde Eigenschaft mit zunehmender Rückstellkraft zu übernehmen. Diese Druckregelung des Hydraulikzylinders wird vorzugsweise abhängig von den Signalen einer Hubbewegungsüberwachung der beteiligten Pressplatten elektronisch geregelt.

Besonders bevorzugt wird als federndes Element in den erfindungsgemäßen Gewichtausgleichselementen jedoch eine Gasdruckfeder verwendet. Diese ist variabel und sehr einfach einstellbar und kann gegebenenfalls auch geregelt werden, beispielsweise um Gewichtsänderungen in den einzelnen Laminatoretagen durch unterschiedliche Belegung derselben mit Werkstücken zu berücksichtigen.

Um zu verhindern, dass die Gasdruckfedern von der Abwärme der Laminatoretagen beeinflusst werden, werden diese vorzugsweise im Bereich der (nicht beheizten) Pressenbasis angeordnet. Bei einer Mehretagen-Laminierpresse, bei der die Pressenbasis feststeht und das Pressen-Oberteil zum Öffnen und Schließen vertikal bewegt wird, können die Gasdruckfedern ganz einfach am Boden bzw. an der Basis des Gestells der Mehretagen-Laminierpresse angeordnet werden.

Weitere Vorteile ergeben sich hierbei, wenn die Gewichtsausgleichselemente im Wesentlichen aus der eben genannten Gasdruckfeder sowie einer daran angebrachten Schubstange und einem an der jeweiligen Pressplatte befestigten, zur Aufnahme der Schubstange vorgesehenen, jedoch nicht an der Schubstange angebrachten Anschlag besteht. Die Schubstange und der an der Pressplatte angebrachte Anschlag berühren sich also erst dann, wenn die Mehretagen-Laminierpresse so weit geschlossen worden ist, dass sich die der Schubstange zugeordnete Pressplatte auf die darunterliegende Pressplatte absenkt und damit die entsprechende Laminatoretage schließt. Der Weg, den diese Pressplatte zum Schließen der Laminatoretage zurücklegen muss, entspricht dann dem Federweg der Gasdruckfeder, so dass die Schubstange unnachgiebig und in ihrer Länge unveränderbar ausgestaltet sein kann. Über die am Anschlag der Pressplatte anliegende bzw. in diesem Anschlag sitzende Schubstange wird die Gewichtskraft der Pressplatte auf die im Bereich der Pressenbasis angeordnete Gasdruckfeder abgetragen und von dieser zumindest teilweise kompensiert. Der Federweg der Gasdruckfeder wird hierbei, wie bereits erwähnt, zweckmäßigerweise so gewählt, dass er länger ist als der maximal mögliche Hub der zugeordneten Laminatoretage, so dass die Pressplatte, deren Gewichtskraft über die Schubstange in die Gasdruckfeder eingeleitet wird, nie gegen einen unnachgiebigen Anschlag läuft.

Beim Öffnen der Mehretagen-Laminierpresse löst sich die Schubstange vom Anschlag der ihr zugeordneten Pressplatte in dem Moment, in dem die entsprechende Laminatoretage komplett geöffnet ist und die Pressplatte beginnt, die darunterliegende Pressplatte mit nach oben zu nehmen.

Durch die proportional zum Federweg ansteigende Federkraft der Gasdruckfeder kann sich im Übrigen dann ein quasi-synchrones Schließen aller Laminator-etagen anstatt eines sukzessiven Schließens derselben von unten nach oben ergeben, wenn die Federkraft in etwa gleich der jeweils abgetragenen Gewichtskraft der Pressplatte ist. Dies kann Vorteile bieten, da dann alle zu laminierenden Werkstücke in allen Laminatoretagen gleichbehandelt werden, und nicht etwa die unten liegenden Werkstücke länger in der Mehretagen-Laminierpresse mit Druck beaufschlagt werden, als die oben prozessierten Werkstücke.

Die erfindungsgemäß ausgebildeten Gewichtsausgleichselemente weisen vorzugsweise einen Federweg auf, der in etwa gleich - zweckmäßigerweise etwas größer als - der Hub der zugeordneten Laminatoretage ist, naturgemäß abzüglich der Dicke des zu laminierenden Werkstücks. Bevorzugt ist es jedoch, wenn der Federweg der Gewichtsausgleichselemente regelbar ist und wahlweise entweder in etwa dem Hub der zugeordneten Laminatoretage oder dem Hub der zugeordneten Laminatoretage abzüglich der Dicke des zu laminierenden Werkstücks entspricht. Die Mehretagen-Laminierpresse kann dann auch problemlos mit nur einer Teilbelegung ihrer Laminatoretagen mit Werkstücken verwendet werden.

Ein Ausführungsbeispiel der vorliegenden Erfindung wird im Folgenden anhand der beigefügten Zeichnungen näher beschrieben und erläutert. Es zeigen:
- Figur 1: eine schematische seitliche Ansicht einer erfindungsgemäß ausgestalteten Mehretagen-Laminierpresse mit drei Laminatoretagen, in geöffnetem Zustand;
- Figur 2: die Ansicht aus Figur 1 in zum Teil geschlossenem Zustand.

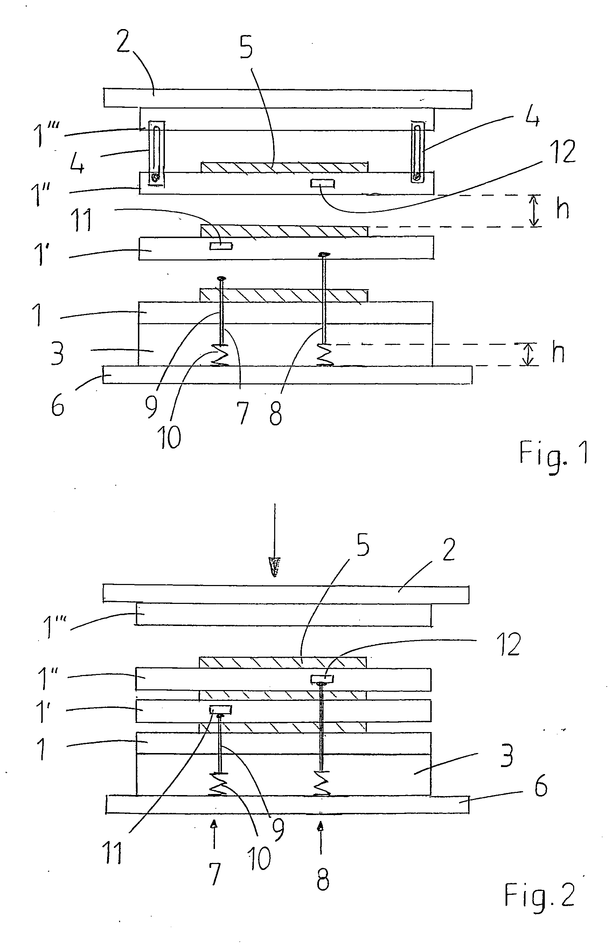

Die in Figur 1 gezeigte schematische Darstellung einer erfindungsgemäß ausgestalteten Mehretagen-Laminierpresse enthält zur besseren Übersichtlichkeit lediglich drei Laminatoretagen, die von insgesamt vier Pressplatten, die als Heizplatten 1, 1', 1", 1'" ausgeführt sind, gebildet werden. Die oberste Heizplatte 1"' ist an einem Pressen-Oberteil 2 befestigt, während die unterste Heizplatte 1 auf einer Pressenbasis 3 sitzt. Die Pressenbasis 3, und damit die unterste Heizplatte 1, ist im gezeigten Ausführungsbeispiel feststehend ausgebildet, während das Pressen-Oberteil 2 über eine (nicht dargestellte) Pressenmechanik vertikal verfahrbar ist, um die einzelnen Laminatoretagen zusammenfahren zu können. Wie in der obersten Laminatoretage 1", 1'" beispielhaft angedeutet ist, sind die Heizplatten 1" jeweils mit Langloch-Aufhängungen an der darüberliegenden Heizplatte 1'" solcherart aufgehängt, dass sie durch Anheben gegen die darüberliegende Heizplatte 1"' bewegt werden können. In jeder der drei Laminatoretagen ist ein Werkstück 5 beispielhaft angeordnet, welches beim Schließen der Mehretagen-Laminierpresse unter Druck- und Wärmeeinwirkung laminiert werden soll.

Im Bereich der Pressenbasis 3, an einem Sockel 6 der Mehretagen-Laminierpresse, sind zwei erfindungsgemäß als federnde Anschlagselemente ausgebildete Gewichtsausgleichselemente 7, 8 befestigt. Sie sind in der vorliegenden Figur 1 schematisch dargestellt und bestehen aus jeweils einer Schubstange 9 und einer Gasdruckfeder 10. Der Federweg h der Gasdruckfedern 10 entspricht dem maximalen Hub der zugeordneten Laminatoretage 1', 1", abzüglich der Höhe des Werkstücks 5, der wiederum mit dem Bezugszeichen h bezeichnet ist. Da die Schubstangen 9 der Gewichtsausgleichselemente 7 unterschiedlich lang ausgebildet sind und dem minimalen Abstand zwischen dem Sockel 6 und der zugeordneten Heizplatte 1', 1" bei geschlossener Mehretagen-Laminierpresse entsprechen, können die Gasdruckfedern 10 aller Gewichtsausgleichselemente 7, 8 mit demselben Federweg h versehen sein und, soweit Werkstücke 5 mit identischen Höhen verwendet werden, mit einem gemeinsamen Regelkreis geregelt werden, um beispielsweise den Wechsel von einer Werkstückdicke auf eine andere Werkstückdicke zu berücksichtigen.

Die Gewichtsausgleichselemente 7, 8 wirken mit Anschlägen 11, 12 zusammen, die an den jeweils zugeordneten Heizplatten 1', 1" befestigt sind. Während bei geöffneter Mehretagen-Laminierpresse (Figur 1) keine Verbindung zwischen den Gewichtsausgleichselementen 7, 8 und den ihnen zugeordneten Anschlägen 11, 12 besteht, kommen die Schubstangen 9 der Gewichtsausgleichselemente 7, 8 beim Schließen der Mehretagen-Laminierpresse in Anlage mit den Anschlägen 11, 12, wie Figur 2 zeigt. Hierdurch werden die Gewichtskräfte der Heizplatten 1', 1" über die Schubstangen 9 und die Gasdruckfedern 10 abgetragen und in den Sockel 6 der Mehretagen-Laminierpresse eingeleitet, so dass die Werkstücke 5 insofern entlastet werden. Die Gasdruckfedern 10 sind hierbei vorteilhafterweise von sämtlichen Heizplatten 1, 1', 1", 1"' entfernt angeordnet, so dass sie von deren Abwärme in keiner Weise beeinflusst werden.

Zur Figur 2 darf an diese Stelle angemerkt werden, dass es sich lediglich um eine schematische Darstellung handelt, die die erfindungsgemäßen Zusammenhänge verdeutlichen soll. Ein Bild wie in Figur 2 dargestellt, bei dem zwei Laminatoretagen 1, 1' und 1', 1" geschlossen sind, während eine dritte Laminatoretage 1", 1'" noch geöffnet ist, wird sich nur dann einstellen, wenn die Gewichtsausgleichselemente 7, 8 nur einen Teil der Gewichtskraft der Heizplatten 1', 1", beispielsweise 70 bis 90 %, abfangen. Wenn die Gewichtsausgleichselemente 7, 8 die Gewichtskraft jeweils zu etwa 100 % abtragen, ergibt sich ein anders Bild: Denn dadurch, dass der Federweg h der Gasdruckfedern 10 dem Hub h der Laminatoretagen entspricht, und die Gasdruckfedern 10 beim Einfedern eine proportional zum zurückgelegten Federweg ansteigende Gegenkraft gegen die Gewichtskraft der Heizplatten 1', 1" erzeugen, werden sich die einzelnen Laminatoretagen quasi-synchron schließen

## Patentansprüche

1. Mehretagen-Laminierpresse zum Laminieren von im Wesentlichen plattenförmigen Werkstücken unter Druck- und Wärmeeinwirkung, umfassend eine Anzahl von, jeweils paarweise eine Laminatoretage bildenden, gemeinsam vertikal zusammenfahrbaren Pressplatten (1, 1', 1", 1"'), eine Pressenbasis (3) und ein Pressen-Oberteil (2), wobei die Pressenbasis (3) und/oder das Pressen-Oberteil (2) vertikal verfahrbar sind, um die Pressplatten (1, 1', 1 ", 1"') zusammenzufahren, sowie Gewichtsausgleichselemente (7, 8), die den Pressplatten (1', 1") zugeordnet sind, um die im zusammengefahrenen Zustand vom Eigengewicht der jeweiligen Pressplatte (1', 1 ") erzeugte Gewichtskraft zumindest zum Teil zu kompensieren,
**dadurch gekennzeichnet,**
**dass** die Gewichtsausgleichselemente (7, 8) als an der Pressenbasis (3) und/oder dem Pressen-Oberteil (2) gegengelagerte, federnde Anschlagselemente ausgebildet sind.

2. Mehretagen-Laminierpresse nach Anspruch 1,
**dadurch gekennzeichnet,**
**dass** die Gewichtsausgleichselemente (7, 8) jeweils eine Gasdruckfeder (10) enthalten.

3. Mehretagen-Laminierpresse nach Anspruch 2,
**dadurch gekennzeichnet,**
**dass** die Gasdruckfedern (10) im Bereich der Pressenbasis (3) angeordnet sind.

4. Mehretagen-Laminierpresse nach Anspruch 3,
**dadurch gekennzeichnet,**
**dass** die Gewichtsausgleichselemente (7, 8) im Wesentlichen aus der Gasdruckfeder (10), einer daran angebrachten Schubstange (9) und einem an der jeweiligen Pressplatte (1') befestigten, zur Aufnahme der Schubstange (9) vorgesehenen, jedoch nicht an der Schubstange (9) befestigten Anschlag (11) bestehen.

5. Mehretagen-Laminierpresse nach mindestens einem der Ansprüche 2 bis 4,
**dadurch gekennzeichnet,**
**dass** die Gasdruckfeder (10) regelbar ausgebildet ist.

6. Mehretagen-Laminierpresse nach Anspruch 1,
**dadurch gekennzeichnet,**
**dass** die Gewichtsausgleichselemente (7, 8) einen Hydraulikzylinder mit nachgeschaltetem hydropneumatischen Druckspeicher enthalten.

7. Mehretagen-Laminierpresse nach Anspruch 1,
**dadurch gekennzeichnet,**
**dass** die Gewichtsausgleichselemente (7, 8) jeweils einen Hydraulikzylinder mit aktiver Druckregelung, umfassend eine Pumpe und eine Regeleinheit, enthalten.

8. Mehretagen-Laminierpresse nach Anspruch 7,
**dadurch gekennzeichnet,**
**dass** die Druckregelung des Hydraulikzylinders abhängig von den Signalen einer Hubbewegungsüberwachung elektronisch geregelt ist.

9. Mehretagen-Laminierpresse nach mindestens einem der Ansprüche 1 bis 8,
**dadurch gekennzeichnet,**
**dass** die Gewichtsausgleichselemente (7, 8) einen Federweg (h) aufweisen, der in etwa dem Hub (h) der zugeordneten Laminatoretage (1', 1") abzüglich der Dicke des zu laminierenden Werkstücks (5) entspricht.

10. Mehretagen-Laminierpresse nach mindestens einem der Ansprüche 1 bis 8,
**dadurch gekennzeichnet,**
**dass** der Federweg (h) der Gewichtsausgleichselemente (7, 8) regelbar ist und wahlweise entweder in etwa dem Hub der zugeordneten Laminatoretage (1', 1") oder dem Hub der zugeordneten Laminatoretage (1', 1") abzüglich der Dicke des zu laminierenden Werkstücks (5) entspricht.

## Claims

1. Multi-level laminating press for laminating substantially board-like workpieces under the action of pressure and heat, comprising a number of press plates (1, 1', 1", 1"'), pairs of which each form a laminator level and which can jointly be brought together vertically; a press base (3) and a press upper part (2), the press base (3) and/or the press upper part (2) being movable vertically in order to bring the press plates (1, 1', 1", 1"') together; and counterweight elements (7, 8) which are assigned to the press plates (1', 1") in order that the weight force produced in the brought-together state by the inherent weight of the respective press plate (1', 1") is at least to some extent compensated, **characterised in that**
the counterweight elements (7, 8) are in the form of resilient stop elements which abut against the press base (3) and/or the press upper part (2).

2. Multi-level laminating press according to claim 1,
**characterised in that**
the counterweight elements (7, 8) each contain a gas pressure spring (10).

3. Multi-level laminating press according to claim 2,
**characterised in that**
the gas pressure springs (10) are arranged in the region of the press base (3).

4. Multi-level laminating press according to claim 3,
**characterised in that**
the counterweight elements (7, 8) consist essentially of the gas pressure spring (10), a push rod (9) mounted thereon, and a stop (11) which is attached to the respective press plate (1') and is intended to receive the push rod (9) but is not attached to the push rod (9).

5. Multi-level laminating press according to at least one of claims 2 to 4,
**characterised in that**
the gas pressure spring (10) is designed to be controllable.

6. Multi-level laminating press according to claim 1,
**characterised in that**
the counterweight elements (7, 8) contain a hydraulic cylinder with a downstream hydropneumatic pressure reservoir.

7. Multi-level laminating press according to claim 1,
**characterised in that**
the counterweight elements (7, 8) each contain a hydraulic cylinder having an active pressure controller, comprising a pump and a control unit.

8. Multi-level laminating press according to claim 7,
**characterised in that**
the pressure controller of the hydraulic cylinder is controlled electronically in dependence upon the signals of a stroke movement monitor.

9. Multi-level laminating press according to at least one of claims 1 to 8,
**characterised in that**
the counterweight elements (7, 8) have a spring travel (h) which corresponds approximately to the stroke (h) of the associated laminator level (1', 1") minus the thickness of the workpiece (5) being laminated.

10. Multi-level laminating press according to at least one of claims 1 to 8,
**characterised in that**
the spring travel (h) of the counterweight elements (7, 8) is controllable and, as desired, corresponds either approximately to the stroke of the associated laminator level (1', 1") or to the stroke of the associated laminator level (1', 1") minus the thickness of the workpiece (5) being laminated.

## Revendications

1. Presse à stratifier à plusieurs étages pour la stratification de pièces essentiellement en forme de plaques sous l'action de pression et de chaleur, comprenant un certain nombre de plaques de presse (1, 1', 1", 1"'), formant respectivement par paires un étage de presse à stratifier et pouvant être conjointement rapprochées verticalement, une base de presse (3) et une partie supérieure (2) de presse, sachant que la base de presse (3) et/ou la partie supérieure (2) de presse sont verticalement mobiles afin de rapprocher les plaques de presse (1, 1', 1", 1"'), et comprenant des éléments (7, 8) d'équilibrage de poids, qui sont associés aux plaques de presse (1', 1") afin de compenser au moins pour partie la force massique produite dans l'état rapproché par le poids propre de la plaque de presse respective (1', 1"),
**caractérisée en ce que** les éléments (7, 8) d'équilibrage de poids sont réalisés sous la forme d'éléments de butée à effet de ressort, en contre-appui contre la base de presse (3) et/ou la partie supérieure (2) de presse.

2. Presse à stratifier à plusieurs étages selon la revendication 1, **caractérisée en ce que** les éléments (7, 8) d'équilibrage de poids contiennent chacun un ressort à gaz (10).

3. Presse à stratifier à plusieurs étages selon la revendication 2, **caractérisée en ce que** les ressorts à gaz (10) sont disposés dans la région de la base de presse (3).

4. Presse à stratifier à plusieurs étages selon la revendication 3, **caractérisée en ce que** les éléments (7, 8) d'équilibrage de poids sont constitués pour l'essentiel du ressort à gaz (10), d'une tige de poussée (9) mise en place sur celui-ci et d'une butée (11) fixée sur la plaque de presse respective (1') et prévue pour recevoir la tige de poussée (9) sans toutefois être fixée sur la tige de poussée (9).

5. Presse à stratifier à plusieurs étages selon au moins une des revendications 2 à 4, **caractérisée en ce que** le ressort à gaz (10) est réalisé avec capacité de régulation.

6. Presse à stratifier à plusieurs étages selon la revendication 1, **caractérisée en ce que** les éléments (7, 8) d'équilibrage de poids contiennent un vérin hydraulique avec un accumulateur de pression hydropneumatique monté en aval de celui-ci.

7. Presse à stratifier à plusieurs étages selon la revendication 1, **caractérisée en ce que** les éléments (7, 8) d'équilibrage de poids contiennent chacun un vérin hydraulique à régulation de pression active, comprenant une pompe et une unité de régulation.

8. Presse à stratifier à plusieurs étages selon la revendication 7, **caractérisée en ce que** la régulation de pression du vérin hydraulique est régulée électroniquement en fonction des signaux d'une surveillance de la course de déplacement.

9. Presse à stratifier à plusieurs étages selon au moins une des revendications 1 à 8, **caractérisée en ce que** les éléments (7, 8) d'équilibrage de poids présentent une course de ressort (h) qui correspond à peu près à la course (h) de l'étage associé (1', 1") de la presse à stratifier déduction faite de l'épaisseur de la pièce (5) à stratifier.

10. Presse à stratifier à plusieurs étages selon au moins une des revendications 1 à 8, **caractérisée en ce que** la course de ressort (h) des éléments (7, 8) d'équilibrage de poids est régulable et correspond au choix soit à peu près à la course de l'étage associé (1', 1") de la presse à stratifier soit à la course de l'étage associé (1', 1") de la presse à stratifier déduction faite de l'épaisseur de la pièce (5) à stratifier.
